# EUROPÄISCHE PATENTSCHRIFT

(11) **EP 3 760 889 B1**
(45) Veröffentlichungstag und Bekanntmachung des Hinweises auf die Patenterteilung: **07.05.2025**
(21) Anmeldenummer: 20161944.2
(22) Anmeldetag: 10.03.2020
(51) Int. Cl.: F16D 48/06

(54) **ANTRIEBSSTRANG EINES FAHRZEUGS SOWIE VERFAHREN ZUM BETREIBEN EINES ANTRIEBSSTRANGS EINES FAHRZEUGS**
DRIVE TRAIN OF A VEHICLE AND METHOD FOR OPERATING A DRIVE TRAIN OF A VEHICLE
CHAINE CINÉMATIQUE D'UN VÉHICULE AINSI QUE PROCÉDÉ DE FONCTIONNEMENT D'UNE CHAINE CINÉMATIQUE D'UN VÉHICULE

(30) Priorität: 01.07.2019 DE 102019117633
(43) Veröffentlichungstag der Anmeldung: 06.01.2021
(73) Patentinhaber: CLAAS Tractor S.A.S., 78141 Vélizy-Villacoublay Cedex (FR)
(72) Erfinder: Guiard-Dreux, Celestin, 27550 Degré (FR); Schütte, Robin, 33142 Büren (DE); Hegon, Jeremy, 78830 Fontenay Le Fleury (FR)
(74) Vertreter: CLAAS Gruppe

(56) Entgegenhaltungen:
- DE-A1- 10 230 651
- DE-A1- 102004 009 233
- DE-A1- 102008 002 070
- DE-A1- 102012 208 443
- DE-A1- 102015 225 993
- DE-A1- 19 806 497
- DE-A1- 3 606 229

## Beschreibung

Die vorliegende Erfindung betrifft einen Antriebsstrang einer landwirtschaftlichen oder kommunalen Arbeitsmaschine, wobei der Antriebsstrang einen Antriebsmotor, ein Getriebe sowie zumindest eine erste Kupplungsvorrichtung umfasst.

Beim Betreiben des Antriebsstranges einer landwirtschaftlichen oder kommunalen Arbeitsmaschine können beim Anfahren und/oder Reversieren Situationen auftreten, in denen es aufgrund eines Lastanstiegs zu einem Abwürgen eines als Verbrennungskraftmaschine ausgeführten Antriebsmotors kommen kann. Insbesondere bei schweren Zugarbeiten oder einer zu schwachen Motorisierung in Relation zu einem mitgeführten und angetriebenen Anbaugerät besteht die Gefahr, dass der Antriebsmotor beim Anfahren oder Reversieren bei einer zu starken Zunahme der Last abgewürgt wird.

Aus der DE 39 26 716 A1 ist ein Antriebsstrang einer landwirtschaftlichen Arbeitsmaschine bekannt, umfassend eine regelbare Brennkraftmaschine sowie ein stufenloses Getriebe. Zwischen der Brennkraftmaschine und dem Getriebe befindet sich keine Kupplung. Beim Anfahren der Arbeitsmaschine erfolgt eine Absenkung der Motordrehzahl, um den Gesamtwirkungsgrad des leistungsverzweigten Getriebes zu verbessern.

Die EP 1 144 886 B1 betrifft ein Verfahren zur Betätigung insbesondere einer Wendekupplungsvorrichtung zum Reversieren der Fahrtrichtung, die auch in einem Rutschbetrieb, der sogenannten Inch-Funktion, betrieben wird. Durch das Verfahren wird dabei eine automatische Begrenzung der Reibleistung zur Schonung der Kupplung vorgenommen. Hierfür werden die Reibleistung und eine Temperatur der Kupplungsvorrichtung durch eine automatische Steuerung oder Regelung der stufenlosen Übersetzung des Getriebes in Abhängigkeit von einem oder mehreren Parametern automatisch beeinflusst. Für als Traktoren ausgeführte Arbeitsmaschinen wird aufgrund einer im Bedarfsfall benötigten konstanten Zapfwellendrehzahl eine Variation der Motordrehzahl ausgeschlossen.

Die DE 102 30 651 A1, DE 10 2012 208 443 A1 und DE 36 06 229 A1 offenbaren weitere Antriebsstränge mit einer Kupplung zwischen der Motorwelle und dem Getriebe, wobei die Motordrehzahl während des Starts geregelt wird.

Ausgehend vom vorstehend beschriebenen Stand der Technik liegt der Erfindung die Aufgabe zugrunde, einen Antriebsstrang einer landwirtschaftlichen oder kommunalen Arbeitsmaschine sowie ein Verfahren zum Betreiben eines Antriebsstrangs einer landwirtschaftlichen oder kommunalen Arbeitsmaschine bereitzustellen, welche ein Abwürgen eines Antriebsmotors im Antriebsstrang beim Anfahren oder Reversieren verhindern.

Diese Aufgabe wird vorrichtungstechnisch durch einen Antriebsstrang mit den Merkmalen des Anspruches 1 sowie durch eine landwirtschaftliche oder kommunale Arbeitsmaschine mit einem Antriebsstrang mit den Merkmalen des nebengeordneten Anspruches 11 und verfahrenstechnisch durch ein Verfahren zum Betreiben eines Antriebsstrangs einer landwirtschaftlichen oder kommunalen Arbeitsmaschine mit den Merkmalen des nebengeordneten Anspruches 12 gelöst. Vorteilhafte Weiterbildungen der Erfindung sind Gegenstand der Unteransprüche.

Gemäß dem Anspruch 1 wird ein Antriebsstrang einer landwirtschaftlichen oder kommunalen Arbeitsmaschine vorgeschlagen wobei der Antriebsstrang einen Antriebsmotor, ein Getriebe sowie zumindest eine erste Kupplungsvorrichtung umfasst. Insbesondere kann das Getriebe als Lastschaltgetriebe ausgeführt sein. Um ein Abwürgen des Antriebsmotors beim Anfahren oder Reversieren zu verhindern, ist erfindungsgemäß vorgesehen, dass der Antriebsstrang zumindest eine Steuerungsvorrichtung umfasst, die dazu eingerichtet ist, bei einem Anfahrvorgang und/oder einem Reversiervorgang eine von dem Antriebsmotor bereitgestellte Motordrehzahl in Abhängigkeit mindestens eines Betriebsparameters des Antriebsstranges temporär anzuheben. Durch das temporäre Anheben der Motordrehzahl des Antriebsmotors wird ein Abwürgen des Antriebsmotors bei einem Anstieg der Motorlast vermieden. Dies ist besonders bei niedrig motorisierten landwirtschaftlichen Arbeitsmaschinen von Vorteil, da deren Antriebsmotoren über keine großen Drehmomentreserven verfügen. Insbesondere erfolgt das temporäre Anheben der Motordrehzahl des Antriebsmotors in Abhängigkeit mindestens eines Betriebsparameters der ersten Kupplungsvorrichtung.

Hierbei kann die erste Kupplungsvorrichtung als eine Reversierkupplungsvorrichtung ausgeführt sein. Mittels der als Reversierkupplungsvorrichtung ausgeführten ersten Kupplungsvorrichtung lässt sich ein Wechsel der Fahrtrichtung realisieren. Dabei kann die Reversierkupplungsvorrichtung eine Kupplung für Vorwärtsfahrt und eine Kupplung für Rückwärtsfahrt enthalten. Beide Kupplungen der Reversierkupplungsvorrichtung können als hydraulisch betätigbare Lamellenkupplungen ausgeführt sein.

Erfindungsgemäß ist der mindestens eine Betriebsparameter ein an der ersten Kupplungsvorrichtung auftretender Schlupf. Schlupf an der ersten Kupplungsvorrichtung tritt stets während des Anfahrvorganges oder des Reversiervorganges auf. Durch das Anheben der Motordrehzahl, insbesondere der Leerlaufdrehzahl, in Abhängigkeit vom Schlupf als ein Betriebsparameter der ersten Kupplungsvorrichtung kann ein Abwürgen des Antriebsmotors bei einem Anstieg der Motorlast vermieden werden, wenn der Schlupf der ersten Kupplungsvorrichtung beim Anfahren oder Reversieren abnimmt.

Bevorzugt kann die Steuerungsvorrichtung dazu eingerichtet sein, den an der ersten Kupplungsvorrichtung auftretenden Schlupf mittels von Drehzahlsensoren bereitgestellten Daten zu bestimmen, wobei ein Drehzahlsensor eine Antriebsdrehzahl vor der ersten Kupplungsvorrichtung und zumindest ein weiterer Drehzahlsensor eine Abtriebsdrehzahl nach der ersten Kupplungsvorrichtung erfasst. Hierzu können die Daten der Drehzahlsensoren mittels eines Bussystems, wie einem CAN-Bus, an die Steuerungsvorrichtung übermittelt werden. Die Steuerungsvorrichtung kann anhand der CAN-Bus-Daten durch deren Auswertung auf das Auftreten von Schlupf schließen sowie die aktuelle Größenordnung des Schlupfes berechnen. Auf diese Weise kann die Steuerungsvorrichtung einen Verlauf des Schlupfes bestimmen, in dessen Abhängigkeit die Steuerung oder Regelung der Motordrehzahl erfolgt. Bevorzugt kann der eine Drehzahlsensor die Antriebsdrehzahl an der Eingangswelle des Getriebes erfassen, während der andere Drehzahlsensor die Abtriebsdrehzahl vorzugsweise unmittelbar hinter der ersten Kupplungsvorrichtung erfasst.

Weiterhin kann der mindestens eine Betriebsparameter eine Schaltstellung eines Reversierschalters sein. Die Schaltstellung des Reversierschalters kann ebenfalls anhand von entsprechenden über den CAN-Bus übertragenen CAN-Bus-Daten durch die Steuerungsvorrichtung ermittelt werden. Eine Änderung der Schaltstellung des Reversierschalters geht mit einer Fahrtrichtungsumkehr einher, wozu die erste Kupplungsvorrichtung entsprechend angesteuert wird. In Reaktion hierauf bestimmt die Steuerungsvorrichtung den an der ersten Kupplungsvorrichtung auftretenden Schlupf, um durch die Ansteuerung des Antriebsmotors die Motordrehzahl anzuheben.

Des Weiteren kann der mindestens eine Betriebsparameter eine Pedalstellung eines Kupplungspedals sein. Anhand der Pedalstellung des Kupplungspedals lässt sich durch die Steuerungsvorrichtung bestimmen, ob die erste Kupplung mit Reibungs-Schlupf betrieben wird. Darüber hinaus kann ein weiterer Betriebsparameter ein am Getriebe geschalteter Gang sein, der beim Anfahren bzw. Reversieren ausgewählt wurde. Die Information über den ausgewählten Gang kann ebenfalls anhand von vorhandenen CAN-Bus-Daten durch die Steuerungsvorrichtung ermittelt werden. Hierbei können die Daten bezüglich des aktuell geschalteten Gangs an dem Getriebe von einer Getriebesteuerungsvorrichtung bereitgestellt werden, die über den CAN-Bus übertragen und von der Steuerungsvorrichtung ausgewertet werden.

Insbesondere kann die Anhebung der Motordrehzahl des Antriebsmotors durch die Ansteuerung der Steuerungsvorrichtung einen sprunghaft ansteigenden Anfangsverlauf aufweisen. Die anfängliche Anhebung kann dabei näherungsweise dem durch die Steuerungsvorrichtung bestimmten Verlauf des Schlupfs der ersten Kupplungsvorrichtung folgen.

Bevorzugt kann die Steuerungsvorrichtung dazu eingerichtet sein, den Antriebsmotor anzusteuern, so dass der Anfangsverlauf der Motordrehzahl in einen im Wesentlichen konstanten Verlauf übergeht, dessen Zeitdauer vom Unterschreiten eines vorgebbaren Grenzwertes für den Schlupf der ersten Kupplungsvorrichtung abhängig ist. Auf diese Weise kann sichergestellt werden, dass auch in der Phase der Synchronisation der ersten Kupplungsvorrichtung ein Abwürgen des Antriebsmotors vermieden wird.

Des Weiteren kann die Steuerungsvorrichtung dazu eingerichtet sein, nach dem Unterschreiten des vorgebbaren Grenzwertes für den Schlupf die angehobene Motordrehzahl auf einen für den Betrieb notwendige Antriebsdrehzahl abzusenken. Bei der für den Betrieb notwendigen Antriebsdrehzahl kann es sich um die für den ausgewählten Gang spezifische Antriebsdrehzahl handeln.

Zudem kann die Steuerungsvorrichtung dazu eingerichtet sein, die Motordrehzahl auf die Antriebsdrehzahl abzusenken, bevor eine Synchronisation der Kupplungsdrehzahl der ersten Kupplungsvorrichtung erfolgt ist.

Die Absenkung kann dabei über einen einstellbaren Zeitraum erfolgen. Alternativ kann die Absenkung der Motordrehzahl über den Schlupfbereich erfolgen. Durch die langsame Absenkung der Motordrehzahl wird der Fahrkomfort erhöht.

Insbesondere kann die Steuerungsvorrichtung dazu eingerichtet sein, das Anheben der Motordrehzahl unabhängig von einer aktuellen Fahrzeuggeschwindigkeit und/oder Fahrtrichtung durchzuführen.

Gemäß Anspruch 11 wird eine landwirtschaftliche oder kommunale Arbeitsmaschine mit einem Antriebsstrang vorgeschlagen, wobei der Antriebsstrang nach einem der Ansprüche 1 bis 10 ausgeführt ist.

Gemäß Anspruch 12 wird ein Verfahren zum Betreiben eines Antriebsstrangs einer landwirtschaftlichen oder kommunalen Arbeitsmaschine, vorgeschlagen, wobei der Antriebsstrang einen Antriebsmotor, durch den eine Motordrehzahl bereitgestellt wird, welche an ein nachgeordnetes Getriebe übertragen wird, und zumindest eine erste Kupplungsvorrichtung, durch welche das Getriebe und zumindest eine Antriebsachse trieblich miteinander verbunden oder voneinander getrennt werden, umfasst. Insbesondere kann das Getriebe als Lastschaltgetriebe ausgeführt sein. Das Verfahren ist dadurch gekennzeichnet, dass der Antriebsstrang zumindest eine Steuerungsvorrichtung umfasst, durch die der Antriebsmotor angesteuert wird, so dass bei einem Anfahrvorgang und/oder einem Reversiervorgang die Motordrehzahl des Antriebsmotors in Abhängigkeit mindestens eines Betriebsparameters temporär angehoben wird, wobei der mindestens eine Betriebsparameter ein an der ersten Kupplungsvorrichtung auftretender Schlupf ist. Das Verfahren lässt sich auf einfacher Weise in die Steuerung des Antriebsstranges integrieren.

Gemäß einer bevorzugten Weiterbildung können als mindestens ein Betriebsparameter der Schlupf der Kupplungsvorrichtung mittels von Drehzahlsensoren bereitgestellten Daten durch die Steuerungsvorrichtung bestimmt werden, wobei ein Drehzahlsensor eine Antriebsdrehzahl vor der ersten Kupplungsvorrichtung und zumindest ein weiterer Drehzahlsensor eine Abtriebsdrehzahl nach der ersten Kupplungsvorrichtung erfasst. Durch die Verwendung bereits vorhandener Drehzahlsensoren lässt sich der Schlupf in hinreichender Genauigkeit durch die Steuerungsvorrichtung bestimmen, ohne dass es zusätzlicher Sensoren bedarf.

Bevorzugt kann die von der Steuerungsvorrichtung angesteuerte Anhebung der Motordrehzahl des Antriebsmotors einem Drehzahlverlauf folgen, der einen sprunghaft ansteigenden Anfangsverlauf aufweist und dass der Anfangsverlauf der Motordrehzahl in einen im Wesentlichen konstanten Verlaufsabschnitt übergeht, dessen Zeitdauer vom Unterschreiten eines vorgebbaren Grenzwertes für den Schlupf der ersten Kupplungsvorrichtung abhängig ist. Hierbei ist vorteilhaft, dass für die Bestimmung eines auftretenden Schlupfes an der ersten Kupplungsvorrichtung keine zusätzlichen Sensoren erforderlich sind.

Die vorliegende Erfindung wird nachstehend anhand eines in den Zeichnungen dargestellten Ausführungsbeispieles näher erläutert.

Es zeigen:
- Fig. 1: eine schematische und exemplarische Darstellung eines Antriebsstranges eines Fahrzeugs; und
- Fig. 2: ein Diagramm, welches einen Schlupfverlauf einer ersten Kupplungsvorrichtung und einen Drehzahlverlauf eines Antriebsmotors des Antriebsstranges zeigt.

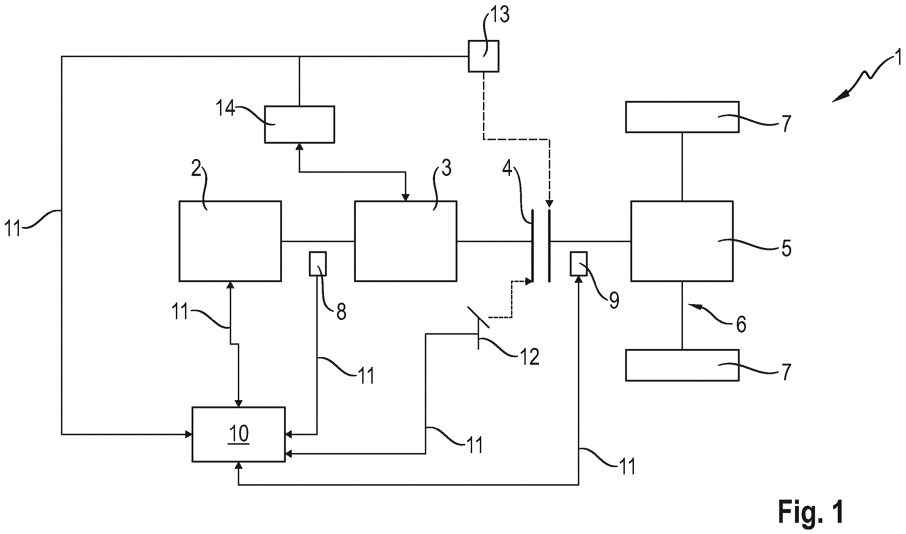

In Fig. 1 ist eine schematische und exemplarische Darstellung eines Antriebsstranges 1 eines Fahrzeugs dargestellt. Das Fahrzeug ist insbesondere eine landwirtschaftliche oder kommunale Arbeitsmaschine, besonders bevorzugt ein Traktor. Der Antriebsstrang 1 umfasst einen Antriebsmotor 2 sowie ein Getriebe 3. Bei Arbeitsmaschinen, insbesondere Traktoren, wird zur Drehmomentübertragung von der Antriebseinheit zum Fahrantrieb häufig ein als sogenanntes Lastschaltgetriebe ausgeführtes Getriebe 3, beispielsweise ein Teillastgetriebe (teillastschaltbares Getriebe) oder ein Volllastgetriebe (volllastschaltbares Getriebe) eingesetzt.

Das Getriebe 3 ist abtriebsseitig durch eine erste Kupplungsvorrichtung 4 mit einem Achsgetriebe 5 verbunden. Bei der ersten Kupplungsvorrichtung 4 handelt es sich insbesondere um eine Reversierkupplungsvorrichtung zum zugkraftunterbrechungsfreien Wechseln einer Fahrtrichtung der Arbeitsmaschine. Die erste Kupplungsvorrichtung 4 erlaubt es, zwischen Vorwärtsfahrt und Rückwärtsfahrt zu wechseln, ohne den Kraftschluss zwischen dem Antriebsmotor 2 und dem Achsgetriebe 5 zu unterbrechen. Die erste Kupplungsvorrichtung 4 kann auch als eine Anfahrkupplung ausgeführt sein. Über das Achsgetriebe 5 wird eine von dem Getriebe 3 übersetzte Antriebsbewegung des Antriebsmotors 2 auf zwei Antriebsräder 7 an einer Antriebsachse 6 verteilt.

Es sind zumindest zwei Drehzahlsensoren 8 und 9 vorgesehen, von denen der Drehzahlsensor 8 eine Antriebsdrehzahl vor der ersten Kupplungsvorrichtung 4 und der zumindest eine weitere Drehzahlsensor 9 eine Abtriebsdrehzahl nach der ersten Kupplungsvorrichtung 4 erfasst. Die Drehzahlsensoren 8, 9 übertragen Signale mittels eines Bussystems 11, beispielsweise einem CAN-Bus, an eine Steuerungsvorrichtung 10. Die Steuerungsvorrichtung 10 ist dazu eingerichtet, die von den Drehzahlsensoren 8, 9 empfangen Signale auszuwerten.

Zur Betätigung der Kupplungsvorrichtung 4 sind ein Kupplungspedal 12 sowie ein Reversierschalter 13 vorgesehen. Die Betätigung und die Pedalstellung des Kupplungspedal 12 werden sensorisch erfasst beispielsweise durch ein Drehpotentiometer, und durch das Bussystem 11 an die Steuerungsvorrichtung 10 übermittelt. Anhand der Pedalstellung und der Dauer, in welcher das Kupplungspedal 12 in einer bestimmten Stellung gehalten wird, wird es der Steuerungsvorrichtung 10 ermöglicht, das Betreiben der Kupplungsvorrichtung im Rutschbetrieb (Inch-Funktion), zu erkennen. Die Betätigung des Reversierschalter 13 durch eine Bedienperson des Fahrzeugs wird ebenfalls durch das Bussystem 11 an die Steuerungsvorrichtung 10 übermittelt.

Dem Getriebe 3 ist eine Getriebesteuerungsvorrichtung 14 zugeordnet, welche der Ansteuerung des Getriebes 3 dient. Die Getriebesteuerungsvorrichtung 14 steht durch das Bussystem 11 mit der Steuerungsvorrichtung 10 in Verbindung. Dadurch stehen der Steuerungsvorrichtung 10 unter anderem Informationen über den aktuell ausgewählten Gang sowie die für den ausgewählten Gang spezifische Antriebsdrehzahl zur Verfügung.

Beim Betreiben des Antriebsstranges 1 können beim Anfahren und/oder Reversieren Situationen auftreten, in denen es aufgrund eines Lastanstiegs zu einem Abwürgen des Antriebsmotors 2 kommen kann. Insbesondere bei schweren Zugarbeiten oder einer zu schwachen Motorisierung in Relation zu einem mitgeführten und angetriebenen Anbaugerät besteht die Gefahr, dass der Antriebsmotor 2 beim Anfahren oder Reversieren bei einer zu starken Zunahme der Last abgewürgt wird. Um dem zu begegnen, ist vorgesehen, dass die zumindest eine Steuerungsvorrichtung 10 in dem Antriebsstrang 1 dazu eingerichtet ist, bei einem Anfahrvorgang und/oder einem Reversiervorgang eine von dem Antriebsmotor 2 bereitgestellte Motordrehzahl in Abhängigkeit mindestens eines Betriebsparameters des Antriebsstranges 1 temporär anzuheben.

Hierzu wird als mindestens ein Betriebsparameter ein an der ersten Kupplungsvorrichtung 4 auftretender Schlupf durch die Steuerungsvorrichtung 10 bestimmt. Die Bestimmung des Schlupfs erfolgt mittels der von den Drehzahlsensoren 8 und 9 über das Bussystem 11 an die Steuerungsvorrichtung 10 übertragenen Daten berechnet. Weitere Betriebsparameter sind die Schaltstellung des Reversierschalters 13 sowie die Pedalstellung des Kupplungspedals 12. Eine Betätigung des Reversierschalters 13 wird von der Steuerungsvorrichtung 10 entsprechend ausgewertet, so dass der Steuerungsvorrichtung 10 die Information über einen Fahrtrichtungswechsel vorliegt, was mit einer entsprechenden Ansteuerung der Antriebsmotors 2 einhergeht. Die Information über die Gangwahl als Betriebsparameter kann von der Steuerungsvorrichtung 10 bei der Ansteuerung des Antriebsmotors 2 ebenfalls berücksichtigt werden. Mittels der Information über die Gangwahl beim Anfahren oder Reversieren kann die von dem Antriebsmotor 2 bereitzustellende Antriebsdrehzahl bestimmt werden.

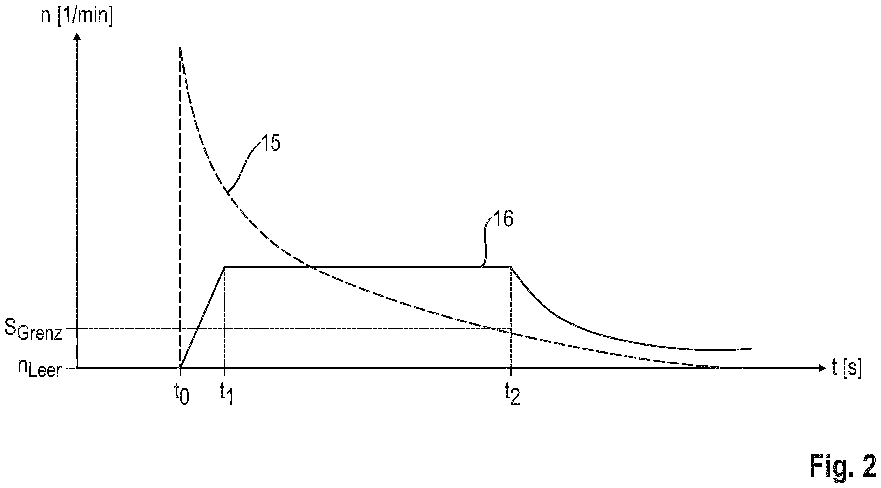

In Fig. 2 ist beispielhaft ein Diagramm dargestellt, welches einen Schlupfverlauf 15 der ersten Kupplungsvorrichtung 4 und einen Drehzahlverlauf 16 des Antriebsmotors 2 des Antriebsstranges 1 zeigt. Bei einem Anfahrvorgang wird die erste Kupplungsvorrichtung 4 geschlossen, wobei es aufgrund der Drehzahldifferenz zum Auftreten von Schlupf kommt. In einem Zeitpunkt t₀ findet ein Anfahren aus dem Stillstand des Fahrzeugs statt. Der Antriebsmotor 2 wird dabei mit einer Leerlaufdrehzahl n_{Leer} betrieben. Der Schlupfverlauf weist einen anfänglichen Maximalwert auf, welcher über die Zeit abnimmt wird. Nach der Synchronisation der ersten Kupplungsvorrichtung 4 tritt in der Regel kein Schlupf mehr auf.

Zur Vermeidung des Abwürgens des Antriebsmotors 2 wird die Motordrehzahl des Antriebsmotors 2 nach der Bestimmung des Auftretens von Schlupf im Zeitpunkt t₀ durch die Ansteuerung der Steuerungsvorrichtung 10 angehoben. Im dargestellten Ausführungsbeispiel wird die Motordrehzahl ausgehend von der Leerlaufdrehzahl n_{Leer} angehoben. Grundsätzlich kann die Anhebung der Motordrehzahl durch die Ansteuerung des Antriebsmotors 2 durch die Steuerungsvorrichtung 10 dabei unabhängig von einer aktuellen Fahrzeuggeschwindigkeit und/oder der Fahrtrichtung erfolgen. Dabei weist der Drehzahlverlauf 16 einen sprunghaft ansteigenden Anfangsverlauf auf. Im Zeitpunkt t₁ wird die Drehzahlerhöhung beendet und der Drehzahlverlauf 15 geht ein in einen im Wesentlichen konstanten Verlauf über. Denkbar wäre bereits hier eine geringfügige Absenkung der Motordrehzahl durch eine entsprechende Ansteuerung des Antriebsmotors 2 durch die Steuerungsvorrichtung 10 einzuleiten. Die Größenordnung der Erhöhung und die Dauer der Erhöhung der Motordrehzahl bestimmen sich in Abhängigkeit von dem durch die Steuerungsvorrichtung 10 berechneten Schlupfverlauf 15.

Ab einem Zeitpunkt t₂ wird die Motordrehzahl abgesenkt. Das Absenken der Motordrehzahl kann sich dabei an dem für den Anfahrvorgang ausgewählten oder vorgegebenen Gang des Getriebes 3 orientieren. Das Absenken der temporär angehobenen Motordrehzahl kann nach dem Unterschreiten eines vorgebbaren Grenzwertes S_{Grenz} für den Schlupf erfolgen. Dabei wird die angehobene Motordrehzahl auf einen für den Betrieb notwendige Antriebsdrehzahl abgesenkt. Die Länge des Intervalls zwischen dem Zeitpunkt t₁ und dem Zeitpunkt t₂, innerhalb dessen die erhöhte Motordrehzahl im Wesentlichen konstant gehalten wird, kann ebenfalls in Abhängigkeit vom Schlupf bestimmt werden. Denkbar ist aber auch, das Intervall vorzugeben, so dass die Drehzahlanhebung über einen definierten Schlupfbereich aufrechterhalten wird. Das Absenken der Motordrehzahl vor der Synchronisation der Kupplungsvorrichtung 4 zu einer Verbesserung des Fahrkomforts.

Bevorzugt kann durch die Ansteuerung des Antriebsmotors 2 durch die Steuerungsvorrichtung 10 die Motordrehzahl auf die Antriebsdrehzahl abgesenkt werden, bevor eine Synchronisation der Kupplungsdrehzahl der ersten Kupplungsvorrichtung 4 erfolgt ist.

### Bezugszeichenliste

- 1: Antriebsstrang
- 2: Antriebsmotor
- 3: Getriebe
- 4: Erste Kupplung
- 5: Achsgetriebe
- 6: Angetriebene Achse
- 7: Räder
- 8: Drehzahlsensor
- 9: Drehzahlsensor
- 10: Steuerungsvorrichtung
- 11: Bussystem
- 12: Kupplungspedal
- 13: Reversierschalter
- 14: Getriebesteuerungsvorrichtung
- 15: Schlupfverlauf
- 16: Drehzahlverlauf
- n_{Leer}: Leerlaufdrehzahl
- S_{Grenz}: Grenzwert für Schlupf
- t₀: Zeitpunkt
- t₁: Zeitpunkt
- t₂: Zeitpunkt

## Patentansprüche

1. Antriebsstrang (1) einer landwirtschaftlichen oder kommunalen Arbeitsmaschine umfassend einen Antriebsmotor (2), ein Getriebe (3) sowie zumindest eine erste Kupplungsvorrichtung (4), **dadurch gekennzeichnet, dass** der Antriebsstrang (1) zumindest eine Steuerungsvorrichtung (10) umfasst, die dazu eingerichtet ist, bei einem Anfahrvorgang und/oder einem Reversiervorgang eine von dem Antriebsmotor (2) bereitgestellte Motordrehzahl (n_{Leer}) in Abhängigkeit mindestens eines Betriebsparameters des Antriebsstranges (1) temporär anzuheben, wobei der mindestens eine Betriebsparameter ein an der ersten Kupplungsvorrichtung (4) auftretender Schlupf ist.

2. Antriebsstrang (1) nach Anspruch 1, **dadurch gekennzeichnet, dass** die erste Kupplungsvorrichtung (4) als eine Reversierkupplungsvorrichtung ausgeführt ist.

3. Antriebsstrang (1) nach Anspruch 1 oder 2, **dadurch gekennzeichnet, dass** die Steuerungsvorrichtung (10) dazu eingerichtet ist, den an der ersten Kupplungsvorrichtung (10) auftretenden Schlupf mittels von Drehzahlsensoren (8, 9) bereitgestellten Daten zu bestimmen, wobei ein Drehzahlsensor (8) eine Antriebsdrehzahl vor der ersten Kupplungsvorrichtung (10) und zumindest ein weiterer Drehzahlsensor (9) eine Abtriebsdrehzahl nach der ersten Kupplungsvorrichtung (10) erfasst.

4. Antriebsstrang (1) nach einem der vorangehenden Ansprüche, **dadurch gekennzeichnet, dass** der mindestens eine Betriebsparameter eine Schaltstellung eines Reversierschalters (13) ist.

5. Antriebsstrang (1) nach einem der vorangehenden Ansprüche, **dadurch gekennzeichnet, dass** der mindestens eine Betriebsparameter eine Pedalstellung eines Kupplungspedals (12) ist.

6. Antriebsstrang (1) nach einem der vorangehenden Ansprüche, **dadurch gekennzeichnet, dass** die Anhebung der Motordrehzahl des Antriebsmotors (2) durch die Ansteuerung der Steuerungsvorrichtung (10) einen sprunghaft ansteigenden Anfangsverlauf aufweist.

7. Antriebsstrang (1) nach Anspruch 6, **dadurch gekennzeichnet, dass** die Steuerungsvorrichtung (10) dazu eingerichtet ist, den Antriebsmotor (2) anzusteuern, so dass der Anfangsverlauf der Motordrehzahl in einen im Wesentlichen konstanten Verlauf übergeht, dessen Zeitdauer vom Unterschreiten eines vorgebbaren Grenzwertes (s_{Grenz}) für den Schlupf der ersten Kupplungsvorrichtung (4) abhängig ist.

8. Antriebsstrang (1) nach Anspruch 7, **dadurch gekennzeichnet, dass** die Steuerungsvorrichtung (10) dazu eingerichtet ist, nach dem Unterschreiten des vorgebbaren Grenzwertes (s_{Grenz}) für den Schlupf die angehobene Motordrehzahl auf einen für den Betrieb notwendige Antriebsdrehzahl abzusenken.

9. Antriebsstrang (1) nach Anspruch 8, **dadurch gekennzeichnet, dass** die Steuerungsvorrichtung (10) dazu eingerichtet ist, die Motordrehzahl auf die Antriebsdrehzahl abzusenken, bevor eine Synchronisation der Kupplungsdrehzahl der ersten Kupplungsvorrichtung (4) erfolgt ist.

10. Antriebsstrang (1) nach einem der vorangehenden Ansprüche, **dadurch gekennzeichnet, dass** die Steuerungsvorrichtung (10) dazu eingerichtet ist, das Anheben der Motordrehzahl unabhängig von einer aktuellen Fahrzeuggeschwindigkeit und/oder Fahrtrichtung durchzuführen.

11. Landwirtschaftliche oder kommunale Arbeitsmaschine mit einem Antriebsstrang (1), **dadurch gekennzeichnet, dass** der Antriebsstrang (1) nach einem der Ansprüche 1 bis 10 ausgeführt ist.

12. Verfahren zum Betreiben eines Antriebsstrangs (1) einer landwirtschaftlichen oder kommunalen Arbeitsmaschine umfassend einen Antriebsmotor (2), durch den eine Motordrehzahl bereitgestellt wird, welche an ein nachgeordnetes Getriebe (3) übertragen wird, zumindest eine erste Kupplungsvorrichtung (4), durch welche das Getriebe (3) und zumindest eine Antriebsachse (6) des Fahrzeugs trieblich miteinander verbunden oder voneinander getrennt werden, **dadurch gekennzeichnet, dass** der Antriebsstrang (1) zumindest eine Steuerungsvorrichtung (10) umfasst, durch die der Antriebsmotor (2) angesteuert wird, dass bei einem Anfahrvorgang und/oder einem Reversiervorgang die Motordrehzahl des Antriebsmotors (2) in Abhängigkeit mindestens eines Betriebsparameters temporär angehoben wird, wobei der mindestens eine Betriebsparameter ein an der ersten Kupplungsvorrichtung (4) auftretender Schlupf ist.

13. Verfahren nach Anspruch 12, **dadurch gekennzeichnet, dass** als mindestens ein Betriebsparameter der Schlupf der Kupplungsvorrichtung (4) mittels von Drehzahlsensoren (8, 9) bereitgestellten Daten durch die Steuerungsvorrichtung (10) bestimmt wird, wobei ein Drehzahlsensor (8) eine Antriebsdrehzahl vor der ersten Kupplungsvorrichtung (4) und zumindest ein weiterer Drehzahlsensor (9) eine Abtriebsdrehzahl nach der ersten Kupplungsvorrichtung (4) erfasst.

14. Verfahren nach Anspruch 12 oder 13, **dadurch gekennzeichnet, dass** die von der Steuerungsvorrichtung (10) durchgeführte Anhebung der Motordrehzahl des Antriebsmotors (2) einem Drehzahlverlauf (16) folgt, der einen sprunghaft ansteigenden Anfangsverlauf aufweist und dass der Anfangsverlauf der Motordrehzahl in einen im Wesentlichen konstanten Verlaufsabschnitt übergeht, dessen Zeitdauer vom Unterschreiten eines vorgebbaren Grenzwertes (s_{Grenz}) für den Schlupf der ersten Kupplungsvorrichtung (4) abhängig ist.

## Claims

1. A drive train (1) of an agricultural or municipal working machine comprising a propulsion engine (2), a transmission (3) as well as at least one first clutch device (4), **characterized in that** the drive train (1) comprises at least one control device (10) which is configured, in the case of a start-up procedure and/or a reversing procedure, to temporarily increase an engine speed (n_{idle}) made available by the propulsion engine (2) as a function of at least one operating parameter of the drive train (1), wherein the at least one operating parameter is a slippage occurring at the first coupling device (4).

2. The drive train (1) according to claim 1, **characterized in that** the first coupling device (4) is constructed as a reversing clutch device.

3. The drive train (1) according to claim 1 or claim 2, **characterized in that** the control device (10) is configured to determine the slippage occurring at the first coupling device (10) by means of data provided from speed sensors (8, 9), wherein one speed sensor (8) detects an input speed in front of the first clutch device (10) and at least one further speed sensor (9) detects an output speed after the first clutch device (10).

4. The drive train (1) according to one of the preceding claims, **characterized in that** the at least one operating parameter is a gear shift position of a reversing gear shift (13).

5. The drive train (1) according to one of the preceding claims, **characterized in that** the at least one operating parameter is a pedal position of a clutch pedal (12).

6. The drive train (1) according to one of the preceding claims, **characterized in that** the increase in the engine speed of the propulsion engine (2) by the control of the control device (10) has an abruptly rising initial profile.

7. The drive train (1) according to claim 6, **characterized in that** the control device (10) is configured to control the propulsion engine (2) so that the initial profile of the engine speed merges into a substantially constant profile the time duration of which is a function of falling below a predeterminable threshold value (S_{threshold}) for the slippage of the first clutch device (4).

8. The drive train (1) according to claim 7, **characterized in that** the control device (10) is configured such that, after falling below the predeterminable threshold value (S_{threshold}) for the slippage, the increased engine speed is reduced to a drive speed which is necessary for the operation.

9. The drive train (1) according to claim 8, **characterized in that** the control device (10) is configured such that the engine speed is reduced to the drive speed before a synchronisation of the clutch speed of the first clutch device (4) has been carried out.

10. The drive train (1) according to one of the preceding claims, **characterized in that** the control device (10) is configured to carry out the increase of the engine speed independently of a current vehicle speed and/or direction of travel.

11. An agricultural or municipal working machine with a drive train (1), **characterized in that** the drive train (1) is constructed in accordance with one of claims 1 to 10.

12. A method for operating a drive train (1) of an agricultural or municipal working machine comprising a propulsion engine (2) via which an engine speed is made available which is transmitted to a downstream transmission (3), at least one first clutch device (4) via which the transmission (3) and at least one drive axle (6) of the vehicle are operatively connected together or operatively separated from each other, **characterized in that** the drive train (1) comprises at least one control device (10) via which the propulsion engine (2) is controlled, **in that**, in the case of a start-up procedure and/or a reversing procedure, the engine speed of the propulsion engine (2) is temporarily increased as a function of at least one operating parameter, wherein the at least one operating parameter is a slippage occurring at the first clutch device (4).

13. The method according to claim 12, **characterized in that** the slippage of the clutch device (4) as the at least one operating parameter is determined by the control device (10) by means of data provided from speed sensors (8, 9), wherein one speed sensor (8) in front of the first clutch device (4) detects an input speed and at least one further speed sensor (9) after the first clutch device (4) detects an output speed.

14. The method according to claim 12 or claim 13, **characterized in that** the increase of the engine speed of the propulsion engine (2) carried out by the control device (10) follows a speed profile (16) which has an abruptly rising initial profile and **in that** the initial profile of the engine speed merges into a substantially constant profile section the time duration of which is a function of falling below a predeterminable threshold value (S_{threshold}) for the slippage of the first clutch device (4).

## Revendications

1. Chaîne cinématique (1) d'une machine de travail agricole ou communale, comprenant un moteur d'entraînement (2), une transmission (3) et au moins un premier dispositif d'embrayage (4), **caractérisée en ce que** la chaîne cinématique (1) comporte au moins un dispositif de commande (10) qui est conçu pour augmenter temporairement un régime moteur (n_{Leer}) fourni par le moteur d'entraînement (2), en fonction d'au moins un paramètre de fonctionnement de la chaîne cinématique (1), lors d'une opération de démarrage et/ou d'une opération d'inversion, le paramètre de fonctionnement, au nombre d'au moins un, étant un patinage survenant sur le premier dispositif d'embrayage (4).

2. Chaîne cinématique (1) selon la revendication 1, **caractérisée en ce que** le premier dispositif d'embrayage (4) est réalisé comme dispositif d'embrayage réversible.

3. Chaîne cinématique (1) selon la revendication 1 ou 2, **caractérisée en ce que** le dispositif de commande (10) est conçu pour déterminer le patinage survenant sur le premier dispositif d'embrayage (4) à l'aide de données fournies par des capteurs de régime (8, 9), un capteur de régime (8) mesurant une vitesse de rotation d'entraînement en amont du premier dispositif d'embrayage (4), et au moins un capteur de régime (9) supplémentaire mesurant une vitesse de rotation de sortie en aval du premier dispositif d'embrayage (4).

4. Chaîne cinématique (1) selon une des revendications précédentes, **caractérisée en ce que** le paramètre de fonctionnement, au nombre d'au moins un, est une position de commutation d'un commutateur inverseur (13).

5. Chaîne cinématique (1) selon une des revendications précédentes, **caractérisée en ce que** le paramètre de fonctionnement, au nombre d'au moins un, est une position de pédale d'une pédale d'embrayage (12).

6. Chaîne cinématique (1) selon une des revendications précédentes, **caractérisée en ce que** l'augmentation du régime moteur du moteur d'entraînement (2), par activation du dispositif de commande (10), présente une variation initiale à montée brusque.

7. Chaîne cinématique (1) selon la revendication 6, **caractérisée en ce que** le dispositif de commande (10) est conçu pour activer le moteur d'entraînement (2) de manière à ce que la variation initiale du régime moteur se transforme en une évolution sensiblement constante dont la durée est fonction du passage en-dessous d'une valeur limite (s_{Grenz}) pouvant être prédéfinie pour le patinage du premier dispositif d'embrayage (4).

8. Chaîne cinématique (1) selon la revendication 7, **caractérisée en ce que** le dispositif de commande (10) est conçu pour abaisser le régime moteur augmenté, jusqu'à une vitesse de rotation d'entraînement nécessaire au fonctionnement, après le passage en-dessous de la valeur limite (s_{Grenz}) pouvant être prédéfinie pour le patinage.

9. Chaîne cinématique (1) selon la revendication 8, **caractérisée en ce que** le dispositif de commande (10) est conçu pour abaisser le régime moteur jusqu'à la vitesse de rotation d'entraînement, avant qu'une synchronisation de la vitesse de rotation d'accouplement du premier dispositif d'embrayage (4) n'ait eu lieu.

10. Chaîne cinématique (1) selon une des revendications précédentes, **caractérisée en ce que** le dispositif de commande (10) est conçu pour effectuer l'augmentation du régime moteur indépendamment d'une vitesse actuelle du véhicule et/ou d'une direction de déplacement.

11. Machine de travail agricole ou communale dotée d'une chaîne cinématique (1), **caractérisée en ce que** la chaîne cinématique (1) est réalisée conformément à l'une des revendications 1 à 10.

12. Procédé pour faire fonctionner une chaîne cinématique (1) d'une machine de travail agricole ou communale, comprenant un moteur d'entraînement (2), qui fournit un régime moteur transmis à une transmission (3) placée en aval, au moins un premier dispositif d'embrayage (4) par lequel la transmission (3) et au moins un essieu moteur (6) du véhicule sont reliés l'un à l'autre ou séparés l'un de l'autre du point de vue de l'entraînement, **caractérisé en ce que** la chaîne cinématique (1) comprend au moins un dispositif de commande (10) qui active le moteur d'entraînement (2), **en ce que** lors d'une opération de démarrage et/ou d'une opération d'inversion, le régime moteur du moteur d'entraînement (2) est augmenté temporairement en fonction d'au moins un paramètre de fonctionnement, le paramètre de fonctionnement, au nombre d'au moins un, étant un patinage survenant sur le premier dispositif d'embrayage (4).

13. Procédé selon la revendication 12, **caractérisé en ce que** le patinage du dispositif d'embrayage (4), en tant que paramètre de fonctionnement, au nombre d'au moins un, est déterminé par le dispositif de commande (10) à l'aide de données fournies par des capteurs de régime (8, 9), un capteur de régime (8) mesurant une vitesse de rotation d'entraînement en amont du premier dispositif d'embrayage (4), et au moins un capteur de régime (9) supplémentaire mesurant une vitesse de rotation de sortie en aval du premier dispositif d'embrayage (4).

14. Procédé selon la revendication 12 ou 13, **caractérisé en ce que** l'augmentation du régime moteur du moteur d'entraînement (2) effectuée par le dispositif de commande (10) suit une variation du régime (16) qui présente une variation initiale à montée brusque, et **en ce que** la variation initiale du régime moteur se transforme en une portion de variation sensiblement constante dont la durée est fonction du passage en-dessous d'une valeur limite (s_{Grenz}) pouvant être prédéfinie pour le patinage du premier dispositif d'embrayage (4).
